# EUROPÄISCHE PATENTANMELDUNG

(11) **EP 1 719 828 A1**
(43) Veröffentlichungstag der Anmeldung: **08.11.2006**
(21) Anmeldenummer: 05009938.1
(22) Anmeldetag: 06.05.2005
(51) Int. Cl.: D01F 1/10, D01F 6/62, D01D 5/08, B60C 9/00

(54) **Reifencord und Verfahren zu seiner Herstellung**

(71) Anmelder: Diolen Industrial Fibers B.V., 6827 AV Arnhem (NL)
(72) Erfinder: Verkuijlen, Martinus Eimericus Cornelius Gerardus, 6715 KG Ede (NL)
(74) Vertreter: Oberlein, Gerriet H. R.

(57) **Zusammenfassung**

Die Erfindung betrifft ein Verfahren zur Herstellung von Reifencord unter Verwendung von vororientierten nicht-verstreckten Fäden auf Basis von Polyestern oder Copolyestern, deren Herstellung die Schritte der Einführung vor dem Verspinnen von 0,03 bis 1 Gew.-% bezogen auf die Polyester oder Copolyester an Partikeln einer Teilchengrößen zwischen 1 und 100 nm, dann Schmelzspinnen der Polyester oder Copolyester in an sich bekannter Weise, Abkühlen der Fäden mittels eines Gasstromes von Umgebungstemperatur oder höher und Aufwicklung der Fäden bei Geschwindigkeiten zwischen 500 und 10000 m/min, bevorzugt zwischen 3500 und 5000 m/min umfasst, welches sich dadurch auszeichnet, dass die Partikel den polyesterbildenden Ausgangsstoffen während der Polyestersynthese zugesetzt werden. Weiterhin ist die Erfindung auf Reifencord gerichtet, der aus dem genannten Verfahren erhältlich ist.

## Beschreibung

Die Erfindung betrifft Reifencord und ein Verfahren zu seiner Herstellung unter Verwendung von vororientierten nicht-verstreckten Fäden (POY) auf Basis von Polyestern oder Copolyestern, deren Herstellung die Schritte der Einführung vor dem Verspinnen von 0,03 bis 1 Gew.-% bezogen auf die Polyester oder Copolyester an Partikeln einer Teilchengrößen zwischen 1 und 100 nm, dann Schmelzspinnen der Polyester oder Copolyester in an sich bekannter Weise, Abkühlen der Fäden mittels eines Gasstromes von Umgebungstemperatur oder höher, beispielsweise 40 bis 70 °C, und Aufwicklung der Fäden bei Geschwindigkeiten zwischen 500 und 10000 m/min, bevorzugt zwischen 3500 und 5000 m/min umfasst.

DE-A-4041042 beschreibt ein Verfahren zur Verbesserung der Produktivität des Verspinnens eines vororientierten, nicht-verstreckten Fadens auf Basis von Polyethylenterephthalat, dem unmittelbar vor dem Verspinnen 0,03 bis 0,1 Gew.-% pyrogenes Siliciumdioxid einer Teilchengröße zwischen 5 und 15 nm zugesetzt wird. Das pyrogene Siliciumdioxid wird dem geschmolzenen Polymeren dabei in Form eines sogenannten Masterbatches zugemischt und unmittelbar anschließend versponnen. Dabei werden nach Spinnung und Aufwicklung zwischen 3500 und 5000 m/min Fäden erhalten, die sich durch eine verzögerte kristalline Struktur und durch deutlich erhöhte Bruchdehnung sowie Schrumpfung im Vergleich zum unmodifizierten Faden auszeichnen. Gemäß DE-A-4041042 wird durch dieses Verfahren eine Produktiviätserhöhung von mindestens 7 % erreicht.

Das Hinzufügen von kleinen Teilchen zu fadenbildenden Polymeren auf Basis von Polyethylenterephthalat unmittelbar vor dem Spinnen, entweder zum Granulat oder zu dessen Schmelze, um damit eine Produktionserhöhung zu erhalten, ist dem Fachmann aus zahlreichen Veröffentlichungen bekannt. Zu nennen sei hier exemplarisch nur die EP-A-0631638, bei der diese Funktion durch imidisiertes Polymethylmethacrylat übemommen wird, welches dem Polyethylenterephthalat vor dem Spinnen zum Granulat zugegeben wird, sowie die dort zitierte Literatur.

EP-A 0048481 beschreibt verstreckte Polyesterfäden, die Siliciumdioxid-Teilchen mit einer mittleren Größe von 5-100 nm enthalten. Die verstreckten Fäden werden mit einem oberflächenaktivierenden Material beschichtet. Das Beschichtungsmaterial besteht aus mindestens einer Verbindung, die aus der Gruppe der Silan-Kupplungsverbindungeri und der organischen Titanverbindungen ausgewählt ist. Das nicht verstreckte und beschichtete Garn wird zu einem Cord verarbeitet.

Die Zugaben von kleinen Teilchen oder Partikeln zum Polyester oder Copolyester - im folgenden auch allgemein als Modifizierung bezeichnet - vor dem Verspinnen führt zu einer deutlichen Erhöhung der Bruchdehnung des so erhaltenen vororientierten Garnes, welches dem Fachmann auch als POY (pre-oriented yarn) geläufig ist. Vermutlich wird durch die Anwesenheit von Partikeln in der Schmelze die spannungsinduzierte Kristallisation während des Spinnprozesses herabgesetzt und es werden daher bei der gleichen Aufwickelgeschwindigkeit Fäden oder Garne mit einer im Vergleich zum unmodifizierten Polyester oder Copolyester erhöhten Restdehnung erhalten. Umgekehrt können auf diese Weise modifizierte Fäden mit der gleichen Restdehnung erhalten werden, wenn die Aufwickelgeschwindigkeit entsprechend erhöht wird. So sind z.B. bei einer Konzentration von 0,6 % an Partikeln im Polymeren Erhöhungen der Aufwickelgeschwindigkeit von 3500 nach 4000 m/min möglich, ohne dass es zu einer Erniedrigung der Restdehnung im Polymeren im Vergleich zum unmodifizierten Polyester oder Copolyester kommt. Beim Spinnen mit dieser Art von Additiven, die im Wesentlichen keine chemischen Wechselwirkungen mit dem Polyester eingehen und somit zu einer physikalischen Modifizierung des Polyesters führen, beobachtet man jedoch häufig das Problem von sogenannten Abschlägern. Abschläger sind dem Fachmann bekannt als Spulenfehler, die beim Spulenaufbau entstehen, wenn ein Fadenstück seitlich abrutscht. Dadurch wird der reibungslose Abzug des Materials bei der Weiterverarbeitung in Frage gestellt.

Ein weiterer Nachteil beim Spinnen, insbesondere beim Schnellspinnen, ist zum anderen die Tendenz der sogenannten physikalisch modifizierten Polyester zur Bildung von Ausbauchungen beim Aufwickeln auf die Spule. Ausbauchungen sind dem Fachmann gleichfalls als Fehler im Spulenaufbau bekannt und führen u. a. zu Problemen bei der Verpackung und beim Versand der fertigen Spulen.

Es hat nicht an Versuchen gefehlt, dieses Problem zu lösen. So schlägt beispielsweise die WO-A-0004083 vor, neben solchen Partikeln, die im wesentlichen keine chemischen Bindungen mit dem Polymeren eingehen, noch zusätzlich sogenannte chemische Modifizierungsmittel einzusetzen, die zu einer teilweisen Verzweigung der Polyester bzw. Copolyester führen. Chemische und physikalische Modifizierungsmittel werden dabei gemäß der Lehre der WO-A-0004083 in einem bestimmten Mengenverhältnis zudosiert, wobei die eine Komponente bereits während der Polykondensation und die anderen Komponente unmittelbar vor dem Spinnprozeß zugesetzt wird. Auf diese Weise ist es gelungen, Abschläger bzw. Ausbauchungen zu verringern bzw. zu vermeiden. Jedoch stellt das Einhalten eines bestimmten Verhältnisses von physikalisch wirksamen und chemisch wirksamen Additiven bei der Polyester- oder Copolyesterherstellung einen zusätzlichen Arbeitsschritt dar, der entsprechende (Dosierungs-)Vorrichtungen erforderlich macht und auch überwacht werden muss.

Bei Verwendung der genannten Arten von Additiven, also sowohl von physikalischen als auch von chemischen, beobachtet man nach Verstrecken auf vergleichbare Enddehnungen jedoch einen Festigkeitsabfall im Vergleich zum unmodifizierten Polyester-Garn bzw. -Faden. Dieser Festigkeitsabfall wirkt sich bei den meisten textilen Anwendungen nicht signifikant negativ aus. Bei den meisten technischen oder industriellen Anwendungen, bei denen hohe Festigkeiten gefordert werden, ist ein solcher Festigkeitsabfall, der typischerweise zwischen 5 und10 % liegt, jedoch ein großes Problem.

Das große Problem beim POY-Spinnen allgemein, also sowohl von unmodifiziertem als auch gemäß Stand der Technik modifiziertem Polyester besteht darin, dass sich POY nur innerhalb eines recht engen Prozeßfensters herstellen läßt. Kleinste Prozesschwankungen führen zu deutlichen Qualitätsfluktuationen. Die Empfindlichkeit des Prozesses lässt sich zum Beispiel anhand des Kochschrumpfes verdeutlichen. So führen Prozeßänderungen, wie zum Beispiel Zunahmen der Aufwickelgeschwindigkeit des POY-Garns, zu einem drastischen Abfall des Kochschrumpfes. Der Grund ist, dass POY-Garn definitionsgemäß einerseits möglichst orientiert, aber andererseits so amorph sein sollte, dass die Dehnung im Bereich von 120-130% liegt.

Andere Parameter wie Anblas- oder Additiv-Schwankungen können zu ähnlich drastischen Qualitätsschwankungen bezüglich Kochschrumpf sowie anderen charakteristischen Eigenschaften führen. Derartige Qualitätsschwankungen wirken sich natürlich auch auf die Eigenschaften von Reifencord aus, der mit den zuvor beschreibenen POY-Garnen hergestellt wurde.

Es liegt also ein Bedarf vor, ein Verfahren zur Herstellung von Reifencord zur Verfügung zu stellen, das es ermöglicht, Reifencord aus Polyester oder Copolyester mit den Eigenschaften zu erhalten, wie sie beispielsweise in der WO-A-0004083 beschrieben werden. Das zur Herstellung von Reifencord verwendete Garn sollte jedoch hinsichtlich Kochschrumpf weniger anfällig auf Schwankungen der Abzugsgeschwindigkeit und z. B. der Additivkonzentration reagieren. Außerdem wäre es von großem Vorteil, wenn die zur Herstellung des Reifencords verwendeten POY-Garne keinen Festigkeitsabfall zeigen.

Die Lösung dieser erfindungsgemäßen Aufgabe gelingt in überraschender Weise durch einen Prozeß, wie im Oberbegriff des Anspruchs 1 beschrieben, der sich dadurch auszeichnet, dass die Partikel den polyester- oder copolyesterbildenden Ausgangsstoffen während der Polyester- oder Copolyestersynthese zugesetzt werden.

Durch diese Maßnahme wird Reifencord erhalten, der POY-Garnen umfasst, die aus modifiziertem Polyester oder Copolyester bestehen und eine deutlich erhöhte Restdehnung aufweisen, wenn man sie bei normaler Abzugsgeschwindigkeit herstellt, also bei etwa 3000-3400 m/min.

Wird dagegen bei Geschwindigkeiten von 4000 bis 4500 m/min aufgewickelt, so werden die typischen Dehnungwerte von unmodifiziertem POY erhalten, also etwa 120-130%. Überraschenderweise ist der Kochschrumpf jedoch deutlich niedriger als bei unmodifiziertem, also gewöhnlichem POY. Der Kochschrumpf liegt statt bei ca. 50% lediglich bei ca. 15%.

Somit gelingt es, mit Hilfe des beschriebenen Verfahrens das enge Betriebsfenster der normalen POY-Spinnung deutlich zu erweitern und damit die Herstellung von Reifencord zu erleichtern.

Außerdem konnte gezeigt werden, dass bei Konzentrationen oberhalb von ca. 4000 ppm Additiv der Kochschrumpf, die Dehnung und auch die Festigkeit des zur Herstellung von Reifencord eingesetzten POY-Garns auf einem nahezu konstanten Niveau liegen. Innerhalb dieses Plateaus ist der Prozess also weitestgehend unempfindlich gegenüber Schwankungen der Additivkonzentration. Dieses Verhalten unterscheidet sich sehr deutlich von den bisher bekannten physikalischen und/oder chemischen Additiven. Da eine gleichmäßige Additivdosierung aus technischer Sicht sehr schwer zu realisieren ist, kann dies als sehr großer Vorteil in Hinsicht auf eine Vergleichmäßigung des Prozesses der POY-Garnherstellung und der Produktqualität des Garns betrachtet werden, was sich auch auf die Produktqualität des mit diesem POY-Garn hergestellten Reifencords vorteilhaft auswirkt.

Als polyesterbildende Ausgangskomponenten für die im erfindungsgemäßen Verfahren verwendeten POY-Garne werden solche Diole und Dicarbonsäuren bzw. Dicarbonsäurederivate, wie Dicarbonsäurediester, bevorzugt, die zur Bildung von Polyethylenterephthalat, Polypropylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) oder deren Mischpolyester auf der Basis hoher Homopolyester-Anteile von mindestens 90 Molprozent führen. Die restlichen Dicarbonsäure- und Diolkomponenten der zuletzt erwähnten Mischpolyester können in Mengen bis zu 10 Molprozent die bei der Herstellung verstreckter Polyestergebilde üblichen Co-Komponenten, wie beispielsweise Isophthalsäure, p,p'-Diphenyldicarbonsäure, alle möglichen Naphthalindicarbonsäuren, Hexahydroterephthalsäure, Adipinsäure, Sebacinsäure und Glykole, wie Trimethylen-, Tetramethylen-, Hexamethylen- und Dekamethylenglykol, sein.

Für die im erfindungsgemäßen Verfahren verwendeten POY-Garne ist es besonders bevorzugt, wenn als Polyester Polyethylenterephthalat eingesetzt wird.

Es ist weiterhin bevorzugt, wenn die Partikel, die im erfindungsgemäßen Verfahren zur Modifizierung der Polyester- oder Copolyester POY-Garne eingesetzt werden, eine mittlere Teilchengröße zwischen 10 und 30 nm, noch bevorzugter zwischen 5 und 15 nm, aufweisen. Solche Partikel sind dem Fachmann auch als Nanopartikel bekannt.

Die einzusetzende Menge an Partikeln soll bevorzugt gering gehalten werden. Für die Herstellung der im erfindungsgemäßen Verfahren eingesetzten POY-Garne hat es sich als absolut ausreichend erwiesen, wenn die Partikel in einer Konzentration von 0,1 bis 0,6 Gew.-% bezogen auf die Polyester oder Copolyester zugesetzt werden.

Prinzipiell sind Partikel aus ganz unterschiedlichen Materialien geeignet, in dem erfindungsgemäßen Verfahren eingesetzt zu werden, also beispielsweise organische, wie Polymere, und/oder anorganische Materialien. Aufgrund der thermischen Belastung ist es jedoch bevorzugt, wenn die im erfindungsgemäßen Verfahren verwendeten POY-Garne Partikel enthalten, die im Wesentlichen aus anorganischem Material bestehen.

Es hat sich weiterhin herausgestellt, dass die Oberflächenbeschaffenheit einen Einfluss auf die Wirksamkeit der Partikel hat. Aus diese Grunde wird es bevorzugt, wenn die einzusetzenden Partikel eine Oberfläche von mindestens 100 m²/g, gemessen nach dem BET-Verfahren, aufweisen.

Obwohl die Partikel prinzipiell inert sein können im Hinblick auf die Umsetzung mit den Polyestern oder Copolyestern bzw. ihren Bestandteilen, haben sich doch solche Partikel als besonders geeignet herausgestellt, bei denen funktionelle Gruppen an den Oberflächen vorliegen, die mit den Polyestern oder Copolyestern oder deren Bausteinen, wie Monomere oder Oligomere, reagieren können.

Ohne an eine Theorie gebunden zu sein, wird vermutet, dass die überraschend gute Wirksamkeit solcher Nanoteilchen, die solche Gruppen an der Oberfläche aufweisen, die mit dem Polyester oder Copolyester zur Reaktion fähig sind, wie z.B. HydroxylGruppen oder Carboxyl-Gruppen, daher gut geeignet sind, weil sie die Funktionalitäten sowohl eines im Wesentlichen physikalisch wirksamen Modifikators als auch die eines im Wesentlichen chemisch wirksamen Modifikators in sich vereinigen.

Ganz offensichtlich entfaltet sich diese Wirkung jedoch nur, wenn die Zugabe der Partikel in der erfindungsgemäßen Weise erfolgt, d.h. bereits während der Synthese der Polyester oder Copolyester.

Aufgrund dieses überraschenden Effektes der Partikel oder Nanopartikel lassen sich die Eigenschaften der Polyester und Copolyester im erfindungsgemäßen Verfahren durch den Zugabezeitpunkt der Nanopartikel oder Partikel während der Synthese der entsprechenden Polyester und Copolyester steuern. Je nach Zugabezeitpunkt kann beispielsweise der Kochschrumpf und/oder die Restdehnung beeinflusst werden. Als Faustregel kann gelten, dass je später der Zugabezeitpunkt der Partikel während der Polymersynthese liegt, desto höher der resultierende Kochschrumpf der im erfindungsgemäßen Verfahren eingesetzten POY-Garne ist. Als günstig für das Verfahren hat sich eine Zugabe beispielsweise beim unten näher erläuterten Umesterungsverfahren auf Basis von Dimethylterephthalat (DMT-Verfahren) bei ca. 220 - 245°C herausgestellt.

Partikel bzw. Nanopartikel, die diese Anforderungen in besonders günstiger Weise erfüllen und dabei gleichzeitig in großer Anzahl - sowohl hinsichtlich der Menge als auch hinsichtlich der Produktvielfalt - verfügbar, günstig, nicht toxisch und umweltfreundlich sind, sind solche, die im Wesentlichen aus Siliciumdioxid bestehen.

Zusätzlich erfüllen Partikel aus Siliciumdioxid die relativ hohen Anforderungen an die mechanische Stabilität der in der vorliegenden Erfindung verwendeten POY-Garne.

Die Herstellung von Polyestern und Copolyestern selbst ist an sich bekannt.

Für das erfindunsgemäße Verfahren ist es noch nicht einmal erforderlich, zu ihrer Herstellung die Herstellungsweise der betreffenden Polyester und Copolyester, wie Umesterungs- und Polykondensationsbedingungen, abzuändern. Die einzige unterschiedliche Maßnahme besteht darin, daß die Partikel den entsprechenden polyesterbildenden Ausgangskomponenten während der ansonsten in üblicher Weise erfolgenden Polyesterherstellung in den erforderlichen Gewichtsprozentmengen hinzugefügt werden. Dies sei anhand des im Rahmen der Erfindung besonders bevorzugten Polyesters geschildert, der dadurch erhalten wird, daß man die Partikel den polyesterbildenden Ausgangskomponenten zufügt, die zur Bildung von Polyethylenterephthalat führen.

So kann die Herstellung von Polyethylenterephthalat in bekannter Weise in zwei Reaktionsstufen erfolgen. Die erste Reaktionsstufe, die kontinuierlich oder diskontinuierlich durchgeführt werden kann, besteht in der Umesterung von Dimethylterephthalat mit Ethylenglykol zu Bis-(2-hydroxyethyl)-terephthalat unter Verwendung von Umesterungskatalysatoren bei z.B. 150-200° C oder in der Direktveresterung der Terephthalsäure mit Ethylenglykol bei etwa 260° C unter Druck, die im allgemeinen keinen Katalysator erfordert und bei der ebenfalls Bis-(2-hydroxyethyl)-terephthalat gebildet wird. Durch Oligokondensationsreaktionen, die bereits unter den Umesterungsbedingungen und Direktveresterungsbedingungen erfolgen, werden daneben auch in mehr oder weniger großer Menge lineare Oligomere des Bis-(2-hydroxyethyl)-terephthalats gebildet. Eine bevorzugte Ausführungsform der Erfindung besteht darin, daß man die Partikel oder Nanopartikel vor oder während der Umesterungsreaktion oder der Direktveresterung den polyesterbildenden Ausgangskomponenten, also im vorliegenden Fall dem Dimethylterephthalat und Ethylenglykol oder der Terephthalsäure und dem Ethylenglykol zufügt. Nach der erfolgten Umesterung ist es vorteilhaft, vorhandene Umesterungskatalysatoren in an sich bekannter Weise durch Zugabe von einer oder mehreren Phosphorverbindungen zu blockieren. Als Blockierungsmittel kommen insbesondere Carbethoxymethyl-diethylphosphonat, Di(polyoxyethylen)hydroxy-methylphosphonat, Tetraisopropyl-methylen-diphosphonat, Phosphonoessigsäureethylester und/oder H₃PO₄ in Betracht, wobei eine zugegebene P-Konzentration von 30-50 ppm in der Regel ausreichend ist. Als besonders bevorzugter Phosphorstabilisator hat sich in diesem Zusammenhang Phenylphosphonsäure (CAS-Nr. 1571 - 33 - 1) erwiesen.

Wird die Herstellung von Bis-(2-hydroxyethyl)-terephthalat und dessen Oligomeren durch Anlagerung von Ethylenoxid an Terephthalsäure durchgeführt, so stellen naturgemäß Terephthalsäure und Ethylenoxid die polyesterbildenden Ausgangskomponenten dar. Der Begriff polyesterbildende Ausgangskomponenten schließt grundsätzlich alle Dicarbonsäure- und Diolderivate ein, beispielsweise auch Dicarbonsäurechloride oder Dioldiacetate, die geeignet sind, zur Bildung der an sich bekannten Polyester und Copolyester verwendet zu werden.

Die zweite Reaktionsstufe, die kontinuierlich oder diskontinuierlich durchgeführt werden kann, besteht in der Polykondensation des Bis-(2-hydroxyethyl)-terephthalats und dessen Oligomeren zu Polyethylenterephthalat bei z.B. 280-300° C im Vakuum unter Verwendung von bekannten Polykondensationskatalysatoren. Eine weitere bevorzugte Ausführungsform der Erfindung besteht darin, daß man die Nanopartikel oder Partikel den polyesterbildenden Ausgangskomponenten, im vorliegenden Fall also dem Bis-(2-hydroxyethyl)-terephthalat und dessen Oligomeren, auch vor dieser Schmelzepolykondensation zufügen kann. Ein Zusatz der Partikel im Anfangsstadium der Polykondensationsstufe ist im Prinzip ebenfalls möglich.

Das so hergestellte modifizierte Polyethylenterephthalat besitzt eine intrinsische Viskosität von typischerweise 0,55 bis 0,75, was einer relativen Lösungsviskosität von 1,55 bis 1,75 entspricht, gemessen in 1 %iger m-Kresol-Lösung bei 20°C.

Weil das derart modifizierte Polyethylenterephthalat zur Herstellung von Reifenkorden verwendet wird, muß dessen Molekulargewicht analog wie im Falle des Polyethylenterephthalats erhöht werden. Dies kann nach an sich für das Polyethylenterephthalat entwickelten bekannten Verfahrensweisen erfolgen, einschließlich seiner Umsetzung mit Polymerisationsgraderhöhern, beispielsweise mit 2,2'-bis(2-oxazolin), gemäß EP-A-0 169 415. Die erforderliche Erhöhung der intrinsischen Viskosität bis beispielsweise auf 0,85-1,05, was einer relativen Lösungsviskosität von 1,86 bis 2,05 entspricht, gemessen in 1 %iger m-Kresol-Lösung bei 20° C, wird vorzugsweise mittels einer abschließenden Polykondensation in fester Phase bewerkstelligt, wie sie beim Polyethylenterephthalat ebenfalls praktiziert wird. Hierbei wird das gekörnte modifizierte Polyethylenterephthalat im Vakuum oder in einem Inertgasstrom auf Temperaturen unterhalb des Schmelzpunktes erhitzt, z.B. auf 230° C.

Die Art der Zugabe der Partikel oder Nanopartikel in der Synthese der Polyester oder Copolyester kann auf vielfältige Weise erfolgen, wobei die einfachste Form sicherlich die Zugabe in fester Form, als Pulver, darstellt. Im allgemeinen ist diese Art der Zugabe jedoch aufgrund von Dosierungs- und Einmischungsproblemem technisch schwierig zu handhaben und demzufolge nicht bevorzugt. Eine andere, etwas günstigere Dosierungsvariante ist das Aufschlämmen bzw. Dispergieren der Nanopartikel oder Partikel in Wasser. Diese Form führt jedoch gelegentlich zu Agglomerationen und ist eher für den sogenannten Direktveresterungsprozess geeignet.

Die günstigere Lösung und damit die bevorzugte Variante stellt die Dispersion der Partikel in Glycol dar. Hierfür werden im allgemeinen Konzentrationen von etwa 10 bis 30 bis Gew.-% der Partikel in Glycol eingesetzt.

Wie bereits weiter oben erwähnt, werden für die Polykondensationreaktion zu den Polyestern oder Copolyestern Polykondensationskatalysatoren eingesetzt. Im allgemeinen handelt es sich dabei um Antimonkatalysatoren, wie dem bekannten Antimontrioxid. Aufgrund vielfältiger Gründe, die besonders in der Umwelt- und Gesundheitsgefahr von Antimonverbindungen liegen, ist in der Vergangenheit viel Mühe darauf verwendet worden, diese Katalysatoren durch gesundheitsunbedenkliche Verbindungen zu ersetzen. Dabei wurde besonderes Augenmerk auf solche Polykondensationskatalysatoren gelegt, die auf Basis von Titanverbindungen beruhen. Derartige Katalysatoren sind deutlich reaktiver als Antimonverbindungen, führen jedoch des öfteren zu einer Gelbverfärbung der damit hergestellten Polyester oder Copolyester.

Besonders erwähnenswert ist, dass die Polykondensationsreaktion bei Verwendung der Partikel beschleunigt werden kann. Dies führt dazu, dass entweder der Durchsatz bei der Polykondensationsrekation steigt, oder aber die Menge an Polykondensationskatalysator herabgesetzt werden kann, wodurch sich die Herstellung des im erfindungsgemäßen Verfahren hergestellten POY-Garns verbilligt.

Für das Spinnen der im erfindungsgemäßen Verfahren eingesetzten POY-Garne eignen sich praktisch alle bekannten Spinnverfahren, z.B. Schmelzspinnverfahren, wie sie etwa in DE-PS 29 25 006 beschrieben sind. Das Verspinnen der modifizierten Polyester und Copolyester läßt sich praktisch bei allen technisch möglichen Aufwickelgeschwindigkeiten, insbesondere bei Aufwickelgeschwindigkeiten von 500 bis 10 000 m/min problemlos durchführen, wobei die Verstreckung vor dem Aufwickeln (1-stufiges Verfahren) oder separat (2-stufiges Verfahren) durchgeführt werden kann.

Es ist Verdienst der in der vorliegenden Erfindung verwendeten POY-Garne, daß selbst bis zu Aufwickelgeschwindigkeiten von bis zu 8000 m/min teilweise orientierte Garne, d.h. Garne, die noch nicht auf die für den jeweiligen Einsatzzweck erforderliche Bruchdehnung verstreckt sind, abschlägerfrei hergestellt werden können. Diese Garne sind bestens für die erfindungsgemäße Weiterverarbeitung zu Reifencord geeignet.

Besonders bevorzugt ist im erfindungsgemäßen Verfahren die Verwendung von Fäden auf Basis von Polyethylenterephthalat, die im Rahmen der vorliegenden Erfindung erhalten worden sind und sich zudem dadurch kennzeichnen, dass sie nach Spinnung und Aufwicklung bei einer Geschwindigkeit zwischen 500 und 5000 m/min eine niedrigere Doppelbrechung aufweisen als gleichermaßen hergestellte Polyethylenterephthalatfäden ohne den Zusatz der Partikel während der Polyethylenterephthalatsynthese. Die Doppelbrechungswerte liegen dabei in diesem Geschwindigkeitsbereich unterhalb von 0,04. Die Bestimmung der Doppelbrechung erfolgt in an sich üblicher Weise mit der Methode von Sénarmont.

Bevorzugt weisen derartige im erfindungsgemäßen Verfahren verwendeten Polyethylenterephthalatfäden zusätzlich einen Kochschrumpf von weniger als 50 %, gemessen nach DIN 53866 T2, auf.

Wie bereits erwähnt, ist die Erfindung auf die Herstellung von Reifencord unter Verwendung der bereits beschreibenen Polyester- oder Copolyesterfäden gerichtet.

Wie ebenfalls bereits beschrieben, werden als Teil des erfindungsgemäßen Verfahrens POY-Garne bei einer Aufwickelgeschwindigkeit von 3500 m/min hergestellt, die eine niedrige Doppelbrechung aufweisen und demzufolge ein höheres Streckverhältnis benötigen, um die Zielwerte der Festigkeit und Dehnung zu erreichen. Dies deutet auf eine Verringerung der Orientierung des POY-Garnes hin. Geringere Orientierung bedeutet für den Fachmann in aller Regel, dass solch ein Garn zu einem Reifenkord mit verringerter Dimensionsstabilität führt. Dieses wirkt sich aus durch einen höheren Schrumpf bei vorgegebener Festigkeit und Dehnung.

Es wurde nun aber überraschend festgestellt, dass es im erfindungsgemäßen Verfahren nicht zu dieser erwarteten Verringerung, sondern vielmehr sogar zu einer Steigerung der Dimensionsstabilität des resultierenden Reifencords kommt. Bei einem Versuch mit schneller Abkühlung während der Herstellung der im erfindungsgemäßen Verfahren verwendeten POY-Garne wurde überraschend festgestellt, dass sich mit Hilfe des hier beschriebenen Vorgehensweise sogar bei einer Aufwickelgeschwindigkeit von nur 500 m/min POY-Garn herstellen läßt, das bereits ein höheres Streckverhältnis benötigt, um die Zielwerte der Festigkeit und Dehnung zu erreichen. Dieses deutet darauf hin, dass es schon bei Abzugsgeschwindigkeiten von 500 m/min zu einer Erhöhung der Dimensionsstabilität kommt. Die gefundenen Effekte haben somit große Vorteile für die erfindungsgemäße Produktion von Reifencord.

Es hat sich weiterhin herausgestellt, dass die im erfindungsgemäßen Verfahren verwendeten modifizierten Polyester- und Copolyesterfäden eine Verbesserung bei der Haftung der daraus hergestellten Cords zu Gummi ergeben.

Das im erfindungsgemäßen Verfahren praktizierte Zusetzen der Nanopartikel während der Polyester- oder Copolyestersynthese erlaubt eine Erhöhung des Durchsatzes sowohl in der Polykondensationsphase als auch bei der Spinnung.

Darüber hinaus ist die Dosierung der Partikel oder Nanopartikel deutlich einfacher, da nur eine Art von Additiven zugegeben werden muss anstelle von zwei Dosierungsschritten.

Selbstverständlich könne die Partikel oder Nanopartikel auch zusammen mit anderen, üblichen und/oder hier beschriebenen Additiven eingesetzt werden.

Die Erfindung ist ferner auf einen aus dem erfindungsgemäßen Verfahren erhältlichen Reifencord gerichtet.

Die Erfindung soll im Folgenden anhand einer Figur sowie eines Beispiels näher erläutert werden, wobei diese Erläuterungen lediglich dem besseren Verständnis dienen, keinesfalls jedoch als in irgendeiner Weise einschränkend angesehen werden sollen.

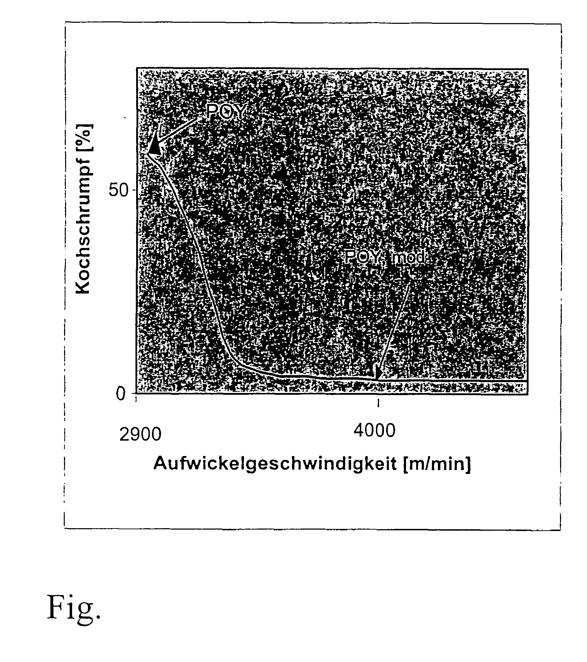

Die Figur verdeutlicht schematisch den Einflusses der Aufwickelgeschwindigkeit auf den Kochschrumpf der im erfindungsgemäßen Verfahren verwendeten POY-Garne. Erkennbar ist, dass unmodifiziertes POY (POY) bei einem Betriebspunkt hergestellt wird, bei dem kleine Änderungen der Aufwickelgeschwindigkeit großen Einfluss auf den Kochschrumpf haben. Weiterhin ist ersichtlich, dass der Betriebspunkt des im Rahmen der Erfindung modifizierten POY (POY, mod) bei einer deutlich geringeren Steigung des Kochschrumpfes liegt.

Beispiel

Ein mit 0.6 % Silica-Nanoteilchen (Siliciumdioxid) durch Zusatz während der Synthese modifiziertes Polyethylenterephthalat und ein nicht-modifiziertes Polyethylenterephthalat wurden jeweils versponnen, bei einer Abzugsgeschwindigkeit von 3500 m/min aufgewickelt und separat auf einem Dampfstreckwerk verstreckt zu einem 1100 dtex Faden. In der folgenden Tabelle sind sie wichtigsten Daten zusammengestellt.

**Tabelle**

| | | | 0% Silica | 0.6% Silica |
|---|---|---|---|---|
| Garn | Doppelbrechung | | 0.053 | 0.036 |
| | Streckverhältnis | | 2.006 | 2.340 |
| | Festigkeit | mN/tex | 698 | 696 |
| | Dehnung | % | 11.6 | 11.7 |
| | TASE2 ¹⁾ | mN/tex | 168 | 166 |
| | TASE5 ¹⁾ | mN/tex | 407 | 403 |
| Reifencord | Festigkeit | mN/tex | 539 | 542 |
| | Schrumpf ²⁾ | % | 2.5 | 1.8 |

| | | | | |
|---|---|---|---|---|
| 1) TASE2 oder TASE5 = Festigkeit bei 2 oder 5 % Dehnung 2) = bei einen Zielwert von der TASE5 von 180 mN/tex. | | | | |

Durch den Zusatz der Silica-Nanoteilchen ist die Doppelbrechung gesenkt worden und es war ein fast 17% höheres Streckverhältnis erforderlich, um dieselben Garndaten zu erhalten. Im Reifenkord ist daher der Schrumpf deutlich erniedrigt.

## Patentansprüche

1. Verfahren zur Herstellung von Reifencord unter Verwendung von vororientierten nicht-verstreckten Fäden auf Basis von Polyestern oder Copolyestern, deren Herstellung die Schritte der Einführung vor dem Verspinnen von 0,03 bis 1 Gew.-% bezogen auf die Polyester oder Copolyester an Partikeln einer Teilchengrößen zwischen 1 und 100 nm, dann Schmelzspinnen der Polyester oder Copolyester in an sich bekannter Weise, Abkühlen der Fäden mittels eines Gasstromes von Umgebungstemperatur oder höher und Aufwicklung der Fäden bei Geschwindigkeiten zwischen 500 und 10000 m/min, bevorzugt zwischen 3500 und 5000 m/min umfasst, **dadurch gekennzeichnet, dass** die Partikel den polyester- oder copolyesterbildenden Ausgangsstoffen während der Polyester- oder Copolyestersynthese zugesetzt werden.

2. Verfahren nach Anspruch 1, **dadurch gekennzeichnet, dass** die Partikel eine Teilchengröße zwischen 10 und 30 nm aufweisen.

3. Verfahren nach Anspruch 1 oder 2, **dadurch gekennzeichnet, dass** die Partikel in einer Konzentration von 0,1 bis 0,6 Gew.-% bezogen auf die Polyester oder Copolyester zugesetzt werden.

4. Verfahren nach einem oder mehreren der Ansprüche 1 bis 3, **dadurch gekennzeichnet, dass** die Partikel im Wesentlichen aus anorganischem Material bestehen.

5. Verfahren nach einem oder mehreren der Ansprüche 1 bis 4, **dadurch gekennzeichnet, dass** die Partikel eine Oberfläche von mindestens 100 m²/g, gemessen nach dem BET-Verfahren, aufweisen.

6. Verfahren nach einem oder mehreren der Ansprüche 1 bis 5, **dadurch gekennzeichnet, dass** die Partikel funktionelle Gruppen an den Oberflächen aufweisen, die mit den Polyestern oder Copolyestern oder deren Bausteinen, wie Monomere oder Oligomere, reagieren können.

7. Verfahren nach einem oder mehreren der Ansprüche 1 bis 5, **dadurch gekennzeichnet, dass** die Partikel im Wesentlichen aus Siliciumdioxid bestehen.

8. Verfahren nach einem oder mehreren der Ansprüche 1 bis 7, **dadurch gekennzeichnet, dass** die Polyethylenterephthalatfäden nach Spinnung und Aufwicklung bei einer Geschwindigkeit zwischen 500 und 5000 m/min eine niedrigere Doppelbrechung aufweisen als gleichermaßen hergestellte Polyethylenterephthalatfäden ohne den Zusatz der Partikel während der Polyethylenterephthalatsynthese.

9. Polyethylenterephthalatfäden nach Anspruch 8, **dadurch gekennzeichnet, dass** die Polyethylenterephthalatfäden einen Kochschrumpf von weniger als 50 %, gemessen nach DIN 53866 T2, aufweisen.

10. Reifencord erhältlich aus dem Verfahren nach einem oder mehren der Ansprüche 1 bis 9.
